# EUROPÄISCHE PATENTSCHRIFT

(11) **EP 1 266 852 B1**
(45) Veröffentlichungstag und Bekanntmachung des Hinweises auf die Patenterteilung: **15.09.2004**
(21) Anmeldenummer: 02013418.5
(22) Anmeldetag: 13.06.2002
(51) Int. Cl.: B65H 29/26, B65G 57/04, B65G 21/20

(54) **Vorrichtung zum Transportieren und Stapeln von insbesondere tafelförmigen Gütern und entsprechendes Verfahren**
Device for feeding and stacking particularly tabular goods and corresponding method
Dispositif pour transporter et empiler en particulier des marchandises tabulaires et procédé correspondant

(30) Priorität: 15.06.2001 DE 10129988; 16.11.2001 DE 10157098
(43) Veröffentlichungstag der Anmeldung: 18.12.2002
(73) Patentinhaber: LTG Mailänder GmbH, 70435 Stuttgart (DE)
(72) Erfinder: Michel, Björn, 70193 Stuttgart (DE); Gericke, Stephan, 73760 Ostfildern (DE)
(74) Vertreter: Grosse, Rainer, Dipl.-Ing.

(56) Entgegenhaltungen:
- DE-B- 1 090 579
- DE-B- 1 118 099
- PATENT ABSTRACTS OF JAPAN vol. 017, no. 403 (M-1453), 28. Juli 1993 (1993-07-28) & JP 05 077995 A (FUJI PHOTO FILM CO LTD), 30. März 1993 (1993-03-30)

## Beschreibung

Die Erfindung betrifft eine Vorrichtung zum Transportieren und Stapeln von insbesondere tafelförmigen Gütern, wie Blechtafeln oder ähnlichem, mit einer Zuführtransporteinrichtung, die mit einer Stapeleinrichtung in Verbindung steht, gemäß Oberbegriff des Anspruchs 1.

Ferner bezieht sich die Erfindung auf ein Verfahren zum Transportieren und Stapeln von insbesondere tafelförmigen Gütern, wie Blechtafeln oder ähnlichem, wobei ein jeweiliges Gut mittels einer Zuführtransporteinrichtung mit einer insbesondere einstellbaren Zuführgeschwindigkeit einer Stapeleinrichtung zugeführt wird, entsprechend Oberbegriff des Anspruchs 15.

Vorrichtungen und Verfahren der eingangs genannten Art sind bereits bekannt, siehe Z.B DE1090579A oder DE1118099A. Bei derartigen traditionellen Systemen werden hintereinander einlaufende, insbesondere bedruckte und/oder lackierte Blechtafeln in eine beispielsweise als Stapelbox ausgebildete Stapeleinrichtung geleitet und dort übereinander gestapelt. Dabei erfolgt die Blechtafelzuführung mittels einer in Bezug auf die Stapeleinrichtung vorgeschalteten Zuführtransporteinrichtung, beispielsweise in Form einer Zuführriementransporteinrichtung, welche vorzugsweise mit konstanter Geschwindigkeit betrieben wird. Die Blechtafeln werden horizontal in die Stapeleinrichtung (Stapelbox) gefördert, anschließend auf dem letzten Wegabschnitt mittels eines Anschlagdämpfungssystems gebremst und schließlich in der Stapeleinrichtung abgelegt. Dabei beschreiben die Blechtafeln beim Einlaufen in die Stapeleinrichtung eine Flugbahn, wobei die vorderen Blechtafelecken mehr oder weniger zum Durchhängen neigen. Ein derartiges Durchhängen ist insbesondere bei Blechtafeln mit sogenannten "Scroll-Blechschnitten" derart ausgeprägt, dass die verhältnismäßig instabilen Ecken sehr stark nach unten durchschwingen. Solche nicht erwünschten Schwingbewegungen einer jeweiligen Blechtafel können dazu führen, dass das vordere Tafeleck einer die Stapeleinrichtung erreichenden Blechtafel in eine Ausschnitt-Lücke einer bereits in der Stapeleinrichtung liegenden (abgelegten) Blechtafel eintaucht und mit deren Kanten verhackt. Dies führt zu einer grundsätzlich zu vermeidenden Tafellaufstörung in der Vorrichtung, welche häufig ein komplettes Ineinanderfahren von Blechtafeln bewirkt und damit zu einer Stilsetzung der gesamten Produktionslinie führen kann.

Es ist Aufgabe der Erfindung, eine Vorrichtung und ein Verfahren der eingangs genannten Art zu schaffen, mittels welchen ein störungsfreies und korrektes Transportieren und Stapeln von insbesondere tafelförmigen Gütern vorzugsweise bei einem verhältnismäßig hohen Güterdurchsatz (Anzahl der transportierten und gestapelten Güter pro Zeiteinheit) möglich ist.

Die Aufgabe wird in allgemeinster Form gelöst durch eine Vorrichtung mit den Merkmalen des Anspruchs 1 sowie durch eine Verfahren mit den Merkmalen des Anspruchs 16.

Die Vorrichtung beinhaltet eine Überkopftransporteinrichtung, die wenigstens teilweise in einem Stapelbereich oberhalb der Stapeleinrichtung angeordnet ist und ein aktivierbares und deaktivierbares Haltesystem aufweist, wobei ein Verzögerungssystem vorgesehen ist zur zeitlich verzögerten Aktivierung einer wirksamen Haltekraft der Oberkopftransporteinrichtung zu einem Zeitpunkt, wenn ein in Transportrichtung gesehen vorderer Bereich des Gutes den Stapelbereich in Stapelrichtung überlappt. Dabei dient die Überkopftransporteinrichtung insbesondere zur Bremsung eines jeweiligen Gutes im Wesentlichen bis zu seinem Stillstand in einer Stapelbetriebsstellung (Transportgeschwindigkeit gleich Null oder nahezu gleich Null) und zur anschließenden Stapelung des Gutes in der Stapeleinrichtung insbesondere durch freien Fall (Stapelrichtung) desselben. Da die Güter (zum Beispiel Blechtafeln) in der Stapeleinrichtung nun im Wesentlichen senkrecht nach unten fallen, findet bei dem eigentlichen Stapelvorgang praktisch keine horizontale Relativbewegung einer jeweils zu stapelnden Blechtafel statt, so dass es auch zu keiner nichterwünschten Verhakung von sogenannte "Scroll-Ecken" aufweisenden Blechtafeln in der Stapeleinrichtung kommen kann. Die Bremsung einer jeweiligen Blechtafel kann nun kontrolliert mittels des Haltesystems der Überkopftransporteinrichtung und nicht -wie im Stand der Technik- mittels eines Anschlag-Dämpfungssystems erfolgen, bei welchem die horizontale Geschwindigkeitsenergie einer Blechtafel durch einen weitgehend frontalen, elastischen Stoß aufgezehrt wird.

Eine Beschädigung von übereinander anzuordnenden Blechtafeln kann nun in zuverlässiger Weise vermieden werden, da die jeweils zu stapelnde Blechtafel in der Stapeleinrichtung nicht entlang einer Flugbahn mit Horizontalkomponente bewegt wird, sondern ein Ablegen derselben in Form eines freien Falls im Wesentlichen in rein vertikaler Richtung erfolgt. In dieser Weise werden Relativbewegungen zwischen zwei aufeinanderliegenden Blechtafeln und somit entsprechende Oberflächenbeschädigungen infolge von Reibung vermieden. Darüber hinaus wird die jeweils zu stapelnde Blechtafel nicht einer schlagartigen Stoßkraft in horizontaler Richtung (Anschlag) ausgesetzt, welche insbesondere Kantenbeschädigungen an der Blechtafel hervorrufen kann. vorteilhafterweise kann auch auf Ausrichtbewegungen einer jeweiligen Blechtafel in der Stapeleinrichtung wie zum Beispiel in Form eines Zurückschiebens einer jeweils oberen Blechtafel in der Stapeleinrichtung verzichtet werden, da die Blechtafeln jeweils vor ihrem freien, vertikalen Fall in der Stapeleinrichtung in eine definierte Stapelbetriebsstellung mittels des Haltesystems der Überkopftransporteinrichtung positioniert werden. Deshalb können auch horizontale Relativbewegungen zwischen bereits aufeinanderliegenden Blechtafeln in der Stapeleinrichtung (Ausrichtbewegungen) vermieden werden. Die erfindungsgemäße Vorrichtung ermöglicht somit, horizontale Bewegungsphasen von vertikalen Bewegungsphasen derart zu trennen, dass keine horizontale Relativbewegung zwischen zwei sich in Kontakt befindenden Blechtafeln entstehen kann und somit auch keinerlei Einhakgefahr und/oder Verkratzungsgefahr an den Oberflächen derselben besteht. Gegebenenfalls kann die Zuführtransporteinrichtung als Überkopftransporteinrichtung ausgebildet sein, so dass lediglich eine einzige Transporteinrichtung vorgesehen ist. Ferner wird ein größerer Güterdurchsatz durch die Vorrichtung und somit ein schnelleres Stapeln derselben Güter ermöglicht, da der Verzögerungszeitraum sowohl zum Transport von Gütern als auch zur Überbrückung der notwendigen Aktivierungszeit einer wirksamen Haltekraft an der Überkopftransporteinrichtung genutzt werden.

Vorteilhafterweise ist das Haltesystem geschwindigkeitseinstellbar. Hierdurch wird ermöglicht, dass die Bewegungsenergie einer jeweiligen Blechtafel nun komplett motorisch mittels eines beispielsweise elektromotorischen Bremssystems verzehrt werden kann, wobei sich die entsprechende Blechtafel noch in einer verlängerten Einlaufebene der Stapeleinrichtung befinden kann. Dabei wird unter geschwindigkeitseinstellbar verstanden, dass das Haltesystem beispielsweise mittels einer Steuereinheit auf unterschiedliche Betriebsgeschwindigkeiten variabel eingestellt werden kann. Die Betriebsgeschwindigkeiten können jeweils konstant oder auch kontinuierlich beziehungsweise diskontinuierlich veränderbar sein. Der Verzögerungszeitraum kann somit sowohl zum Transport von Gütern als auch zu einem gleichzeitigen Hochbeschleunigen des Haltesystems (zum Beispiel in Form einer Überkopftransporteinrichtung) auf eine vorgebbare Betriebsgeschwindigkeit genutzt werden, so dass auch hierdurch ein grösserer Güterdurchsatz durch die Vorrichtung und somit ein schnelleres Stapeln derselben Güter ermöglicht wird.

Mit Vorteil weist das Haltesystem mindestens einen Überkopfriemen auf, der zur Ausbildung einer insbesondere einstellbaren Haltekraft mit einem Vakuumund/oder Magnetsystem gekoppelt ist. Dabei sind die Überkopfriemen bei Einsatz eines Vakuumsystems gelocht. Mittels eines derartigen Haltesystems können Haltekräfte erzeugt werden, welche durch den Überkopfriemen hindurch nach oben wirken und somit ein zuverlässiges Anhaften von Gütern (Blechtafeln) am Überkopfriemen ermöglichen. Dabei ist es möglich, dass ein jeweiliges Gut frei von Relativbewegungen die exakte Bewegung des Überkopfriemens vollzieht, bis bei einer Deaktivierung des Vakuum- und/oder Magnetsystems ein freier Fall in vertikaler Richtung des sich in Stapelbetriebsstellung befindenden Gutes in der Stapeleinrichtung erfolgt. Zur Gewährleistung einer optimalen Tafelhaltung mittels des Haltesystems sind vorzugsweise vier voneinander beabstandete Überkopfriemen vorgesehen. Die Anzahl und/oder Anordnung der Überkopfriemen hängt insbesondere von der Größe und geometrischen Form des Gutes ab.

Entsprechend einer möglichen Ausführungsform ist die Zuführtransporteinrichtung unterhalb des zu transportierenden Gutes angeordnet und insbesondere als Riementransporteinrichtung ausgebildet. Eine derartige Zuführtransporteinrichtung erstreckt sich vorzugsweise in horizontaler Richtung und eignet sich besonders zur zuverlässigen und schnellen Zuführung von Gütern -wie zum Beispiel Blechtafelnin die Stapeleinrichtung. Dabei kann auch die Zuführtransporteinrichtung eine Mehrzahl an Transportriemen aufweisen, wobei die Anordnung der Transportriemen an die Anordnung der Überkopfriemen der Überkopftransporteinrichtung angepasst sein sollte, so dass auch eine überlappende Anordnung der Überkopftransporteinrichtung und der Zuführtransporteinrichtung möglich ist.

Die Überkopftransporteinrichtung weist vorzugsweise einen Haltekraftbereich auf, dessen -in Transportrichtung gesehen- erstes Ende in dem Stapelbereich liegt. Somit beginnt die Zone der Haltekräfte des Haltesystems (Vakuum- und/oder Magnetsystem) erst im Bereich oberhalb der Stapeleinrichtung (Stapelbox), vorzugsweise einige Zentimeter vom Stapeleinrichtungsanfang entfernt. Bei sich überlappenden Überkopfriemen und unten liegenden Zuführriemen -in Transportrichtung gesehen- vor der Stapeleinrichtung sind somit keine nach oben gerichtete Haltekräfte an dem oder den Überkopfriemen wirksam. Auf diese Weise kann der (jeweilige) Überkopfriemen noch hinsichtlich seiner Transportgeschwindigkeit beeinflusst werden (Beschleunigungsphase), während das sich in Richtung Überkopfriemen bewegende und von dem (jeweiligen) Zuführriemen getragene Gut (Blechtafel) noch nicht die Zone der Haltekräfte des Haltesystems der Überkopftransporteinrichtung mit seiner Vorderkante erreicht hat. Somit erfolgt eine Fixierung des jeweiligen Gutes an der Überkopftransporteinrichtung zu einem verhältnismäßig späten Zeitpunkt.

Der Haltekraftbereich der Überkopftransporteinrichtung und die Zuführtransporteinrichtung können -in Transportrichtung gesehen- voneinander beabstandet angeordnet sein. Dabei endet die Zuführtransporteinrichtung vorzugsweise vor der Stapeleinrichtung. Gleichzeitig können die Zuführtransporteinrichtung und die Überkopftransporteinrichtung -in Transportrichtung gesehen- zueinander überlappend angeordnet sein unter Ausbildung eines, insbesondere im Wesentlichen horizontalen Transportspalts. Mittels einer derartigen Vorrichtung ist es möglich, einen zuverlässigen Transport von Gütern bei korrekter Übergabe derselben von der Zuführtransporteinrichtung an die Überkopftransporteinrichtung zu gewährleisten, wobei der Haltekraftbereich des Haltesystems der Überkopftransporteinrichtung -in Transportrichtung gesehen- verhältnismäßig hinten, das heißt im Stapelbereich des Gutes oberhalb der Stapeleinrichtung beginnt.

Entsprechend einer möglichen Ausführungsform weist die Überkopftransporteinrichtung in Bezug auf die Transportrichtung der Zuführtransporteinrichtung eine geneigte Transportfläche auf. Dabei ist die Transportfläche der Überkopftransporteinrichtung vorzugsweise in Bezug auf die Horizontale geneigt (horizontale Transportrichtung der Zuführtransporteinrichtung), wobei der Neigungswinkel insbesondere circa 2° bis 5° beträgt. Hierdurch wird ermöglicht, dass ein jeweiliges Gut (zum Beispiel eine Blechtafel) bei Einlaufbeginn in die Stapeleinrichtung frei über die Zuführtransporteinrichtung übersteht und mit geringer Kraft aufgrund einer möglichen Vorderkantenbewegung die Überkopftransporteinrichtung berührt, ohne dass es jedoch gegen selbige stößt oder eine nennenswerte Transportrichtungsumlenkung stattfindet. Der sich aufgrund der leichten Neigung der Überkopftransporteinrichtung in Transportrichtung verjüngende Transportspalt bewirkt eine allmähliche Annäherung des in Transportrichtung gesehen vorderen Bereichs des Gutes an den beziehungsweise die Überkopfriemen. Hierdurch wird eine zuverlässige Fixierung eines jeweiligen Gutes an der Überkopftransporteinrichtung gewährleistet. Dies ist darauf zurückzuführen, dass sich die Haltekräfte in der Nähe der Überkopftransporteinrichtung (Überkopfriemen) mit dem Abstand eines jeweiligen Gutes vom Überkopfriemen überproportional verringern. Durch das Annähern des Gutes an den Überkopfriemen aufgrund der Neigung der Überkopftransporteinrichtung wird verhindert, dass das Gut in einen Bereich geringerer Haltekräfte (zu großer Abstand vom Überkopfriemen) gelangt und von der Überkopftransporteinrichtung abzufallen droht. Gleichzeitig wird die Neigung so gering gehalten, dass sich keine negativen Stosseffekte aufgrund einer geringfügigen Transportrichtungsänderung des Gutes einstellen können.

Vorzugsweise sind die Zuführtransporteinrichtung und die Überkopftransporteinrichtung hinsichtlich ihrer Transportflächen zueinander im Wesentlichen senkrecht zur Transportrichtung beabstandet, insbesondere mit einem Abstand von circa 1 mm bis 10 mm. Ein derartiger Abstand gewährleistet eine störungsfreie Übergabe eines Gutes (zum Beispiel Blechtafel) von der Zuführtransporteinrichtung zur Überkopftransporteinrichtung.

Mit Vorteil weist das Magnetsystem mindestens einen nach dem Flussverdrängungsprinzip arbeitenden Elektromagneten auf, der bei seiner Aktivierung zur Kompensation eines Magnetfeldes mindestens eines Permanentmagneten geeignet ist. Mittels eines derartigen Magnetsystems sind verhältnismäßig kurze An- und Abschaltzeiten (Aktivierung und Deaktivierung des Elektromagneten) erzielbar. Dabei werden die Elektromagneten lediglich für einen verhältnismäßig kurzen Augenblick bestromt, so dass ein Einschaltdauerbetrieb möglich ist. Dies begünstigt eine sehr kompakte Bauform der Elektromagnete. Ein weiterer Vorteil besteht in der damit verbundenen geringen thermischen Belastung der Elektromagnete und der sich daraus ergebenden verhältnismäßig langen Lebensdauer derselben. Mittels eines derartigen Magnetsystems ist somit ein zuverlässiges und zeitgenaues Aktivieren und Deaktivieren des Haltesystems möglich.

Vorzugsweise ist eine Sensoreinheit vorgesehen zur Erfassung mindestens einer definierten Transportstellung eines jeweiligen Gutes. Die Sensoreinheit kann beispielsweise aus zwei gegenüberliegenden Sensoren zur Hinterkantenerkennung einer jeweiligen Blechtafel (Gut) bestehen. Dabei sind die Signale der Sensoreinheit insbesondere wichtig zur zeitgenauen Aktivierung und Deaktivierung des Haltesystems der Überkopftransporteinrichtung sowie zur entsprechenden Beschleunigung und Bremsung der Überkopfriemen derselben.

Entsprechend einer bevorzugten Ausführungsform ist eine zentrale Steuer- beziehungsweise Regeleinrichtung vorgesehen zur Einstellung der Betriebsparameter des Haltesystems der Überkopftransporteinrichtung, insbesondere der Brems- und Beschleunigungsparameter, sowie zur Aktivierung und Deaktivierung des Haltesystems in Abhängigkeit der Transportparameter der Zuführtransporteinrichtung und/oder der Güterabmessungen insbesondere unter Ausnutzung der Informationen der Sensoreinheit. Eine derartige Steuer- beziehungsweise Regeleinrichtung dient zum automatisierten und korrekten Betreiben der Vorrichtung.

Vorteilhafterweise sind die Überkopftransporteinrichtung und/oder die Stapeleinrichtung zur Anpassung an gegebenenfalls unterschiedliche Güterformatgrößen breiten- und/oder längen- und/oder höhenverstellbar. Es sind somit Güter verschiedenster Formen und Formatgrößen mittels der Vorrichtung transportierbar und stapelbar.

Mit Vorteil weist die Stapeleinrichtung mindestens eine mit insbesondere einer Mehrzahl an Luftaustrittsöffnungen versehene Güterkantenführungswand auf. Hierdurch wird das freie Fallen in vertikaler Richtung eines Gutes (zum Beispiel Blechtafel) in der Stapeleinrichtung beschleunigt, da sich kein zu großes Luftpolster unter dem fallenden Gut aufbauen kann (besonders wichtig bei Rechtecktafeln). Insbesondere sind die vordere und hintere Güterkantenführungswand der Stapeleinrichtung (zum Beispiel Stapelbox) mit geeignet großen Luftaustrittsöffnungen versehen.

Zur Lösung der Aufgabe wird ferner ein Verfahren zum Transportieren und Stapeln von insbesondere tafelförmigen Gütern vorgeschlagen, das die Merkmale des Anspruchs 16 aufweist. Das Verfahren ist dadurch gekennzeichnet, dass das jeweilige Gut mittels einer Überkopftransporteinrichtung in einen Stapelbereich transportiert wird, in welcher es im Wesentlichen zum Stillstand gebracht und anschließend von der Überkopftransporteinrichtung freigegeben wird zur Stapelung des Gutes in der Stapeleinrichtung durch freien Fall desselben, wobei eine zeitlich verzögerte Aktivierung einer wirksamen Haltekraft der Überkopftransporteinrichtung zu einem Zeitpunkt erfolgt, wenn ein in Transportrichtung gesehen vorderer Bereich des Gutes den Stapelbereich in Stapelrichtung überlappt. Mittels eines derartigen Verfahrens lassen sich die in Bezug auf die Vorrichtung vorerwähnten Vorteile erzielen.

Vorzugsweise ist das Verfahren durch folgende Verfahrensschritte gekennzeichnet:
- Befördern des jeweiligen Gutes von der Zuführtransporteinrichtung zu der wenigstens teilweise in dem Stapelbereich oberhalb der Stapeleinrichtung angeordneten Überkopftransporteinrichtung;
- Beschleunigen eines Haltesystems der Überkopftransporteinrichtung im Wesentlichen auf die Zuführgeschwindigkeit des Gutes;
- Aktivieren des Haltesystems zur Fixierung des Gutes in einem Haltekraftbereich der Überkopftransporteinrichtung;
- Bremsen des Haltesystems mit dem Gut bis zu dessen Stillstand im Stapelbereich;
- Deaktivieren des Haltesystems zur Stapelung des Gutes bei sich einstellendem freien Fall in im Wesentlichen vertikaler Richtung in der Stapeleinrichtung.

Dabei ist die mittels der Zuführtransporteinrichtung erzielbare Zuführgeschwindigkeit des Gutes vorzugsweise einstellbar und konstant. Ein derartiges Verfahren erlaubt eine besonders schonende Stapelung von Gütern, wie zum Beispiel von dünnen Blechtafeln, und gleichzeitig gegebenenfalls die Einstellung von verhältnismäßig hohen Transportgeschwindigkeiten, da mittels des Haltesystems das jeweilige Gut auf eine Geschwindigkeit von null gebremst wird und daher im Gegensatz zu traditionellen Verfahren kein Anschlagen des jeweiligen Gutes an ein Dämpfungselement erfolgen muss, was zu einer nicht erwünschten Beschädigung des Gutes, wie zum Beispiel einer Tafelvorderkante, führen könnte. Ferner ist es nicht notwendig, ein Stapelgebläse vorzusehen zur Beeinflussung der "freien Flugbahn" eines jeweiligen Gutes, wie es bei konventionellen Stapelvorgängen notwendig ist.

Entsprechend einer bevorzugten Ausführungsvariante erfolgt das Aktivieren des Haltesystems nach Erreichen einer Transportfläche der Überkopftransporteinrichtung im Haltekraftbereich mittels des vorderen Bereichs des Gutes und insbesondere nach Herstellen eines Anlagekontakts des vorderen Bereichs mit der Transportfläche. Dabei liegt der Haltekraftbereich vorzugsweise innerhalb des Stapelbereichs des Gutes oberhalb der Stapeleinrichtung. Dies ermöglicht eine verhältnismäßig "späte" Zuschaltung der Haltekräfte mittels Aktivierung des Haltesystems, vorzugsweise wenn die Zuführgeschwindigkeit des Gutes und die Überkopfriemengeschwindigkeit gleich groß sind.

Vorzugsweise erfolgt während des Beförderns des Gutes von der Zuführtransporteinrichtung zur Überkopftransporteinrichtung zur Begünstigung eines Anlagekontakts des Gutes an einer Transportfläche der Überkopftransporteinrichtung mittels selbiger eine Transportrichtungsänderung von circa 2° bis 5° in Bezug auf die Transportrichtung der Zuführtransporteinrichtung und insbesondere hinsichtlich'der Horizontalen. Aufgrund der Transportrichtungsänderung fällt das Gut (beispielsweise Blechtafel) in entsprechend geneigter Stellung vertikal in der Stapeleinrichtung auf gegebenenfalls bereits gestapelte Güter. Auch hierdurch kann eine unerwünschte Ausbildung eines verhältnismäßig großen Luftpolsters zwischen dem freifallenden Gut und dem sich darunter befindenden Stapel vermieden oder wenigstens eingeschränkt werden.

Mit Vorteil wird mittels einer Sensoreinheit eine Hinterkante des Gutes in einer definierten Transportstellung erfasst zur anschließenden sukzessiven Auslösung des Aktivierens, des Bremsens, des Deaktivierens und des Beschleunigens des Haltesystems. Somit wird mittels eines Hinterkantenimpulses das Bremsprogramm einschließlich des Bremsvorgangs, des Abschaltens von Elektromagneten, des Wiederanlaufs der Überkopfriemen und des Wiedereinschaltens der Elektromagnete gestartet. Mit einem Vorderkantensensor wäre ein sicherer Ablauf des Bremsvorgangs lediglich indirekt möglich, da ein Lichttaster und keine Einweglichtschranke verwendet werden müsste. Ferner müsste bei Einsatz eines Vorderkantensensors die Steuerung das Längenformat des Gutes kennen oder der Vorderkantensensor verschiebbar sein, wodurch eine zusätzliche Bedienereinstellung notwendig werden würde.

Vorteilhafterweise erfolgt in Abhängigkeit einer sensorischen Erfassung einer definierten Transportstellung des Gutes das Aktivieren des Haltesystems nach Ablauf eines konstanten, insbesondere festlegbaren Zeitintervalls. Es wird somit eine konstante "Todzeit" zwischen einer sensorischen Erkennung eines jeweiligen Gutes und einem später erfolgenden, tatsächlichen Schalten des Haltesystems eingehalten. Dies hat zur Folge, dass das Gut bei höherer Transportgeschwindigkeit bereits einen größeren Transportweg zurückgelegt hat, bevor eine Zuschaltung der Haltekräfte mittels Aktivierung des Haltesystems erfolgt, so dass das eigentliche Zuschalten der Haltekräfte bei höheren Geschwindigkeiten in Bezug auf den zurückgelegten Transportweg später erfolgt.

Gemäß einer alternativen Ausführungsvariante wird der Zeitpunkt des Aktivierens des Haltesystems in Abhängigkeit der Transportgeschwindigkeit der Zuführtransporteinrichtung und/oder des Materials und/oder der geometrischen Ausbildung des Gutes festgelegt. Hierdurch ist eine flexible Fixierung eines jeweiligen Gutes an der Überkopftransporteinrichtung mittels des Haltesystems möglich.

Mittels einer Steuer- beziehungsweise Regeleinrichtung kann insbesondere unter Ausnutzung eines parameterabhängigen Kennfeldes ein automatisiertes Transportieren und Stapeln der Güter erfolgen. Beispielsweise kann im Falle von tafelförmigen Gütern mittels eines parameterabhängigen Kennfeldes der Aktivierungszeitpunkt des Haltesystems abhängig gemacht werden vom vorliegenden Tafelmaterial (zum Beispiel Aluminium/Stahl), der Wandstärke (dünn/dick), der Tafellänge und/oder -breite, und ähnlichem. Ein derartiges Kennfeld ist insbesondere geschwindigkeitsabhängig, so dass mit zunehmender Transportgeschwindigkeit der Aktivierungszeitpunkt des Haltesystems entsprechend später realisiert wird.

Weitere vorteilhafte Ausgestaltungen der Erfindung ergeben sich aus der Beschreibung.

Die Erfindung wird nachfolgend in einem Ausführungsbeispiel anhand einer zugehörigen Zeichnung näher erläutert. Es zeigen:
- Figur 1: eine schematische, teilweise geschnittene Seitenansicht einer erfindungsgemäßen Vorrichtung mit transportwegabhängigem Geschwindigkeitsdiagramm;
- Figuren 2 bis 5: die Vorrichtung der Figur 1 in unterschiedlichen Transportbetriebsphasen und
- Figur 6: ein transportwegabhängiges Geschwindigkeitsdiagramm einer erfindungsgemäßen Vorrichtung.

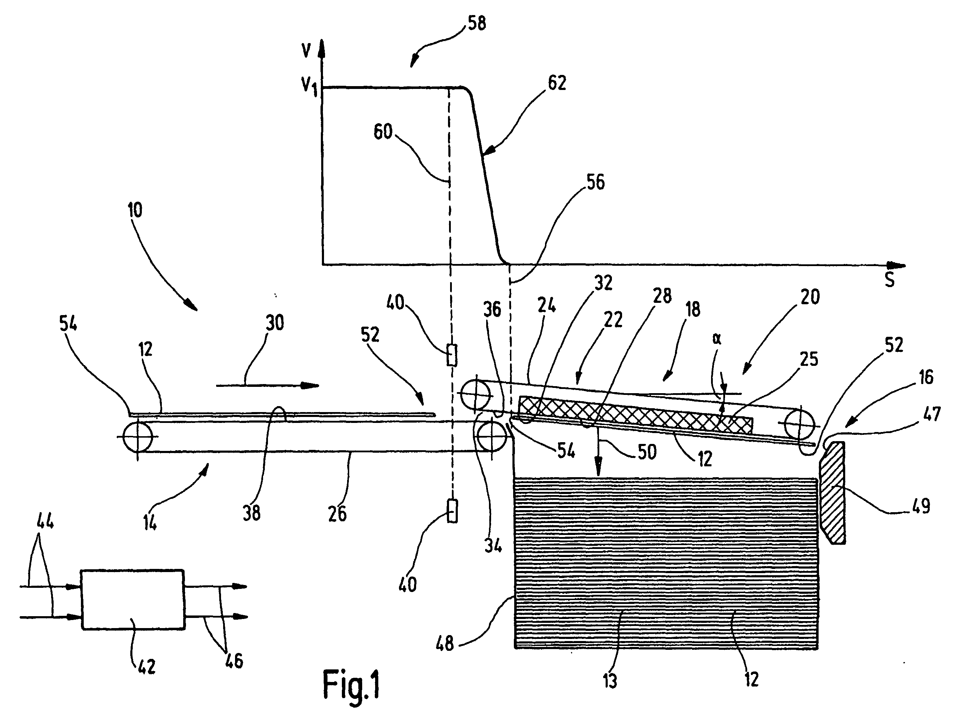

Figur 1 zeigt eine schematische Darstellung einer allgemeinen mit 10 bezeichneten Vorrichtung zum Transportieren und Stapeln von insbesondere tafelförmigen Gütern 12, wie zum Beispiel Blechtafeln oder ähnlichem. Ferner ist in Figur 1 ein transportwegabhängiges Geschwindigkeitsdiagramm 58 dargestellt (Transportgeschwindigkeit V in Abhängigkeit vom Transportweg S). Die Vorrichtung 10 enthält eine Zuführtransporteinrichtung 14, die eine Transportfläche 38 aufweist und mit einer Stapeleinrichtung 16 in Verbindung steht. Zusätzlich ist eine Überkopftransporteinrichtung 18 vorgesehen, welche oberhalb der Stapeleinrichtung 16 angeordnet ist und sich vollständig entlang eines Stapelbereichs 20 erstreckt. Die Überkopftransporteinrichtung 18 weist ein aktivierbares und deaktivierbares sowie geschwindigkeitseinstellbares Haltesystem 22 auf, mittels welchem eine jeweilige Blechtafel 12 an der Überkopftransporteinrichtung 18 fixiert werden kann. Die Überkopftransporteinrichtung 18 dient zur Bremsung einer jeweiligen Blechtafel 12 im Wesentlichen bis zu ihrem Stillstand in einer Stapelbetriebsstellung, welche mit dem Stapelbereich 20 übereinstimmt, wobei während des Bremsvorgangs die Blechtafel 12 am Haltesystem 22 fixiert ist, das heißt das Haltesystem 22 ist aktiviert. Zur anschließenden Stapelung der Blechtafel 12 in der Stapeleinrichtung 16 wird das Haltesystem 22 deaktiviert, so dass die Blechtafel 12 nicht mehr mittels einer Haltekraft am Haltesystem 22 fixiert ist, sondern durch freien Fall im Wesentlichen in vertikaler Richtung gemäß Pfeil 50 auf einen Stapel 13 in der Stapeleinrichtung 16 fallen kann.

Das Haltesystem 22 enthält vorzugsweise eine Mehrzahl an Überkopfriemen 24, welche zur Ausbildung einer einstellbaren Haltekraft mit einem Vakuumund/oder Magnetsystem 25 gekoppelt sind. Ferner ist die Zuführtransporteinrichtung 14 als Riementransporteinrichtung ausgebildet, auf welcher eine jeweilige Blechtafel 12 in Transportrichtung gemäß Pfeil 30 zur Überkopftransporteinrichtung 18 transportiert werden kann. Im dargestellten Ausführungsbeispiel ist die Überkopftransporteinrichtung 18 in Bezug auf die Transportrichtung (Pfeil 30) der Zuführtransporteinrichtung 14 mit einer geneigten Transportfläche 36 versehen. Der Neigungswinkel α der Transportfläche 36 zur Horizontalen beträgt circa 2° bis 5°. Dabei sind die Zuführtransporteinrichtung 14 und die Überkopftransporteinrichtung 18 in Transportrichtung (Pfeil 30) gesehen überlappend angeordnet unter Ausbildung eines sich verjüngenden Transportspalt 34. Der Abstand der Überkopftransporteinrichtung 18 zur Zuführtransporteinrichtung 14 im Transportspalt 34 beträgt dabei vorzugsweise circa 1 mm bis 10 mm.

Die Überkopftransporteinrichtung 18 weist einen Haltekraftbereich 28 auf, dessen -in Transportrichtung (Pfeil 30) gesehen- erstes Ende 32 in dem Stapelbereich 20 liegt. Ferner ist der Haltekraftbereich 28 der Überkopftransporteinrichtung 18 in Bezug auf die Zuführtransporteinrichtung 14 -in Transportrichtung 30 gesehen- beabstandet angeordnet. Beim vorliegenden Ausführungsbeispiel erstreckt sich der Haltekraftbereich 28 vollständig innerhalb des Stapelbereichs 20, wobei er in Transportrichtung 30 gesehen hinter einer Grenzlinie 56 des Stapelbereichs 20 beginnt. Ferner ist eine Sensoreinheit 40 vorgesehen zur Erfassung mindestens einer definierten Transportstellung eines jeweiligen Gutes 12, insbesondere deren Hinterkante 54. Die Sensoreinheit 40 ist entlang einer gestrichelt dargestellten Linie 60 angeordnet und besteht aus zwei gegenüberliegend positionierten Sensoren. Die Sensoreinheit 40 dient dazu, die Hinterkante 54 einer jeweiligen Blechtafel 12 bei Erreichen einer definierten Transportstellung (gestrichelte Linie 60) zu ermitteln und eine zeitgenaue Einleitung einzelner Verfahrensschritte mittels der Steuerbeziehungsweise Regeleinrichtung 42 zum schnellen und korrekten Transportieren und Stapeln von Blechtafeln 12 mittels der Vorrichtung 10 zu gewährleisten. Die gestrichelte Linie 60 liegt -in Transportrichtung 30 gesehen- vor der Grenzlinie 56 (Null-Linie) sowie vor dem Anfang der Überkopftransporteinrichtung 18. Ferner ist eine zentrale Steuerbeziehungsweise Regeleinrichtung 42 vorgesehen zur Einstellung der Betriebsparameter des Haltesystems 22 der Überkopftransporteinrichtung 18, insbesondere der Brems- und Beschleunigungsparameter, sowie zur Aktivierung und Deaktivierung des Haltesystems 22 in Abhängigkeit der Transportparameter der Zuführtransporteinrichtung 14 und/oder der Güterabmessungen insbesondere unter Ausnutzung der Informationen der Sensoreinheit 40. Die Steuer- beziehungsweise Regeleinrichtung 42 ist mittels Datenübertragungsleitungen (Pfeile 44) und Steuerleitungen (Pfeile 46) mit der Vorrichtung 10 wirkverbunden.

Die Stapeleinrichtung 16 weist eine Güterkantenführungswand 48 auf, welche vorzugsweise mit einer Mehrzahl an Luftaustrittsöffnungen (nicht dargestellt) versehen ist. Die Luftaustrittsöffnungen dienen dazu, eine störende Luftkissenausbildung unterhalb einer jeweils abzulagernden Blechtafel 12 in der Stapeleinrichtung 16 zu vermeiden oder wenigstens zu reduzieren. Darüber hinaus enthält die Stapeleinrichtung 16 ein Güterkantenführungselement 49, das wie die Güterkantenführungswand 48 eine Führungsschräge 47 aufweist, sich jedoch nicht über die maximal mögliche Stapelhöhe erstreckt. Die Güterkantenführungswand 48 und das Güterkantenführungselement 49 bilden zusammen eine Stapelbox.

Die Überkopftransporteinrichtung 18 und/oder die Stapeleinrichtung 16 sind zur Anpassung an gegebenenfalls unterschiedlichen Güterformatgrößen, breiten- und/oder längen- und/oder höhenverstellbar. Das Magnetsystem 25 ist vorzugsweise derart ausgebildet, dass es mindestens einen nach dem Flussverdrängungsprinzip arbeiteten Elektromagneten aufweist, der bei seiner Aktivierung zur Kompensation eines Magnetfeldes mindestens eines Permanentmagneten geeignet ist.

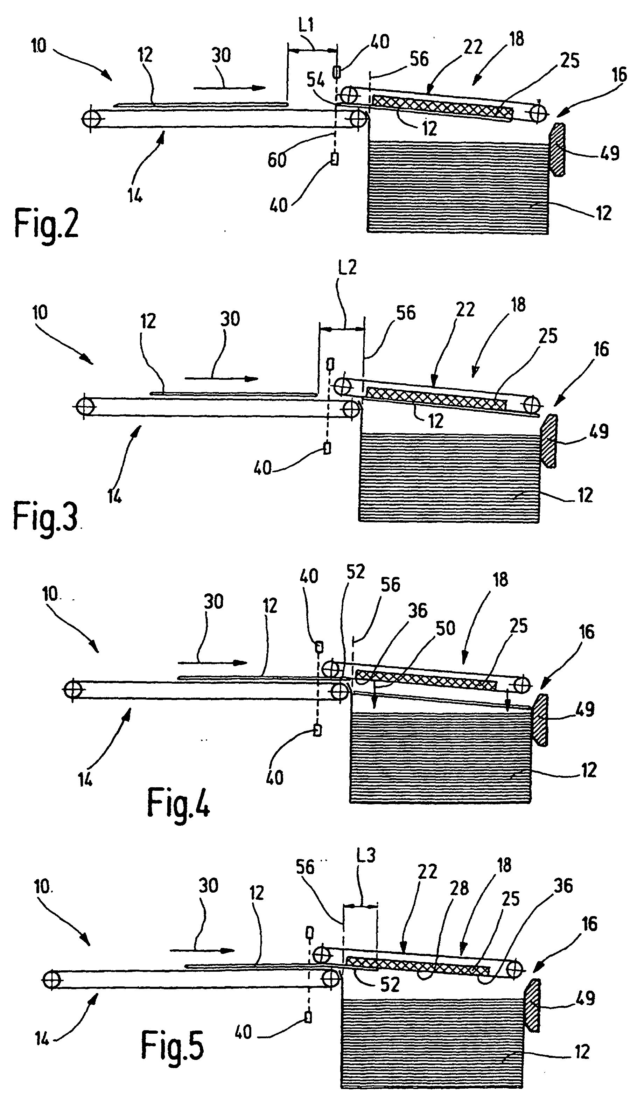

Das Diagramm 58 zeigt einen der Vorrichtung 10 in der Figur 1 entsprechenden und vom Transportweg S abhängigen Transportgeschwindigkeitsverlauf für eine jeweilige Blechtafel 12. Die Blechtafel 12 wird mittels der Zuführtransporteinrichtung 14 zunächst mit der konstanten Geschwindigkeit V₁ transportiert, bis die Hinterkante 54 der Blechtafel 12 von der Sensoreinheit 40 erfasst wird und somit die in Figur 1 dargestellte gestrichelte Linie 60 erreicht hat. Nach einem einstellbaren Verzögerungsweg wird die Blechtafel 12 entsprechend der Kurve 62 derart mittels der Überkopftransporteinrichtung 18 bis zum Stillstand gebremst, bis die Hinterkante 54 der Blechtafel 12 exakt die Grenzlinie 56 (Null-Linie) erreicht und somit die Blechtafel 12 ihre exakte Stapelbetriebsstellung eingenommen hat. Weitere Einzelheiten in Bezug auf die Funktionsweise der Vorrichtung 10 gehen aus den Figuren 2 bis 5 hervor.

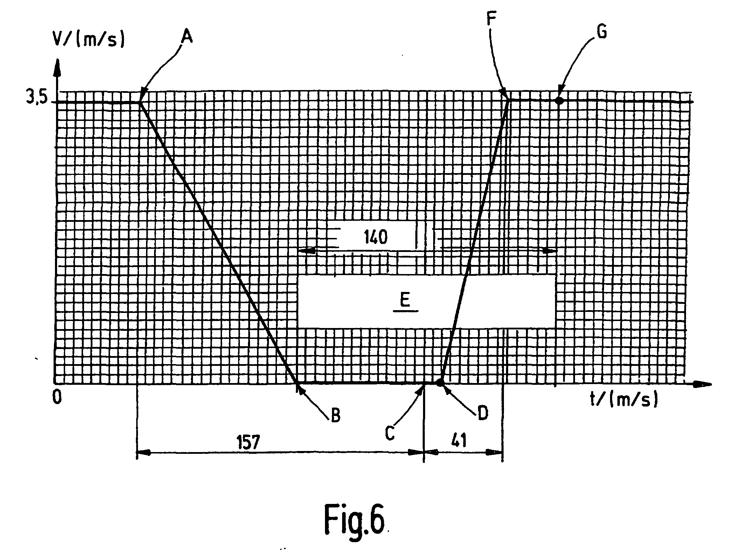

Die Figuren 2 bis 4 zeigen unterschiedliche Transportphasen von mittels der Vorrichtung 10 zu transportierenden und zu stapelnden Blechtafeln 12. Figur 2 zeigt eine an der Überkopftransporteinrichtung 18 fixierte Blechtafel 12, deren Hinterkante 54 die gestrichelte Linie 60 erreicht hat und somit von der Sensoreinheit 40 ermittelt worden ist. Gleichzeitig wird von der Zuführtransporteinrichtung 14 eine weitere Blechtafel 12 in Transportrichtung (Pfeil 30) mit der Geschwindigkeit V₁ (siehe auch Figur 1) in Richtung Überkopftransporteinrichtung 18 transportiert. Die zwei Blechtafeln 12 der Figur 2 werden in der Vorrichtung 10 mit einem Abstand von L1 (beispielsweise 400 mm) und mit einer konstanten Transportgeschwindigkeit von V₁ (beispielsweise 3,5 Meter pro Sekunde) transportiert. Es erfolgt nun, gegebenenfalls zeitverzögert, ein Abbremsen der an der Überkopftransporteinrichtung 18 fixierten Blechtafel 12, bis selbige, in einer definierten Stapelbetriebsstellung gemäß Figur 3 zum Stillstand kommt (Transportgeschwindigkeit gleich null). Gleichzeitig wird die sich auf der Zuführtransporteinrichtung 14 befindende Blechtafel 12 weiterhin mit konstanter Transportgeschwindigkeit V₁ gefördert. Sowohl in der Betriebssituation der Figur 2 als auch der Figur 3 ist das Haltesystem 22 der Überkopftransporteinrichtung 18 zur Fixierung der entsprechenden Blechtafel 12 aktiviert unter Ausbildung einer definierten Haltekraft. Um eine Ablagerung der fixierten Blechtafel 12 in der Stapeleinrichtung 16 durchführen zu können, wird das Haltesystem 22 der Überkopftransporteinrichtung 18 deaktiviert, so dass keine Haltekraft auf die Blechtafel 12 wirkt und selbige entsprechend den Pfeil 50 der Figur 4 durch freien Fall in vertikaler Richtung beispielsweise auf bereits zuvor gestapelte Blechtafeln 12 fallen kann. Gleichzeitig kommt die mittels der Zuführtransporteinrichtung 14 transportierte Blechtafel 12 mit ihrem vorderen Bereich 52 in Anlagekontakt mit der Transportfläche 36 der Überkopftransporteinrichtung 18, wobei allerdings die Vorderkante derselben Blechtafel 12 noch nicht die Grenzlinie 56 (Null-Linie) der Stapeleinrichtung 16 erreicht hat. Während dieser Übergangsphase ist das Haltesystem 22 der Überkopftransporteinrichtung 18 deaktiviert und werden die Überkopfriemen 24 des Haltesystems 22 von null auf die Transportgeschwindigkeit V₁ beschleunigt, um eine korrekte und insbesondere stoßfreie Übergabe der in die Stapeleinrichtung 16 einlaufenden Blechtafel 12 von der Zuführtransporteinrichtung 14 an die Überkopftransporteinrichtung 18 zu ermöglichen. Ein derartiger Übergabezeitpunkt ist bei einer Betriebssituation gemäß Figur 5 erreicht, in welcher die Blechtafel 12 mit ihrem vorderen Bereich um die Länge L₃ in den Stapelbereich 20 ragt und mit der Transportfläche 36 in einem Abschnitt des Haltekraftbereichs 28 der Überkopftransporteinrichtung 18 in Anlagekontakt steht. Die Länge L₃ entspricht beispielsweise 143 mm. Der Betriebssituation gemäß Figur 5 schließt sich eine Betriebssituation gemäß Figur 2 an, wobei die zu stapelnde Blechtafel 12 der Figur 2 der Blechtafel 12 der Figur 5 entspricht.

Die zwei Blechtafeln 12 der Figur 3 sind nun um eine Länge L₂ von beispielsweise 250 mm voneinander beabstandet.

Figur 6 zeigt ein Diagramm, in welchem die Transportgeschwindigkeit V in Abhängigkeit der Transportzeit t dargestellt ist. Punkt A (entspricht Zeitpunkt der Figur 2) der Kurve bezeichnet den Beginn des Abbremsvorgangs der Überkopfriemen 24 des Haltesystems 22 der Überkopftransporteinrichtung 18, wobei der Bremsvorgang in Punkt B abgeschlossen ist, und die entsprechende Blechtafel 12 in der Stapelbetriebsstellung zum Stillstand kommt (V = null). Der Punkt B der Figur 6 entspricht der Transportbetriebsstellung der sich oberhalb der Stapeleinrichtung 16 befindenden Blechtafel 12 der Figur 3. Ab dem Punkt B der Figur 6 wird für eine Zeitspanne von E (beispielsweise 140 ms) das Haltesystem 22 der Überkopftransporteinrichtung 18 deaktiviert, so dass die Blechtafel 12 nicht mehr mittels einer Haltekraft an der Überkopftransporteinrichtung 18 fixiert ist, sondern im freien Fall frühestens ab dem Punkt B in der Stapeleinrichtung 16 vertikal nach unten fallen kann. Der Punkt C bezeichnet den Zeitpunkt der Ankunft der vorderen Kante einer folgenden Blechtafel 12 an der Begrenzungslinie 56 (Null-Linie) der Stapeleinrichtung 16. Beim vorliegenden Beispiel beträgt die Zeitperiode zwischen dem Punkt A und dem Punkt C 157 ms. Der Punkt D bezeichnet den Beginn des Beschleunigungsvorgangs der Überkopfriemen 24 des Haltesystems 22 der Überkopftransporteinrichtung 18 von V = null bis auf V = 3,5 m/s (im vorliegenden Beispiel maximale, konstante Transportgeschwindigkeit) im Punkt F. Dabei beträgt die Zeitspanne zwischen den Punkt C und dem Punkt F im vorliegendem Beispiel 41 ms. Bei Erreichen des Punktes F ist der Zeitpunkt erreicht, bei dem die Transportgeschwindigkeit des jeweiligen Überkopfriemens 24 und der folgenden Blechtafel 12 gleich groß sind. Dabei befindet sich die vordere Kante derselben Blechtafel 12 bereits 143 mm -in Transportrichtung gemäß Pfeil 30 gesehen- hinter der Grenzlinie 56 (Null-Linie) der Stapeleinrichtung 16 (siehe auch Figur 5). Ab dem Punkt F kann somit das Haltesystem 22 der Überkopftransporteinrichtung 18 unter Ausbildung einer die Blechtafel 12 fixierenden Haltekraft aktiviert werden. Im Punkt G erreicht die Blechtafel 12 die definierte Stapelbetriebsstellung, so dass das Haltesystem 22 deaktiviert werden kann (siehe auch Figur 4). Bei diesem Beispiel gemäß Figur 6 beträgt die Gesamtzeit eines Zyklus' (Punkt A bis Punkt F) 198 ms bei einer Produktionsgeschwindigkeit von 2,5 Blechtafeln pro Sekunde. Bei einer traditionellen Auslegung eines Bremssystems gemäß dem Stand der Technik würde man die Haltekräfte bereits im Punkt C nach 157 ms zuschalten. Entsprechend der Erfindung erfolgt das Zuschalten der Haltekräfte jedoch in einem späteren Zeitpunkt, nämlich im Punkt F oder noch später, so dass eine verhältnismäßig hohe Produktionsgeschwindigkeit eingestellt werden kann. Im vorliegenden Beispiel gemäß Figur 6 ragt die Vorderkante einer jeweiligen Blechtafel dann bereits 143 mm in den Stapelbereich 20 hinein.

Der Abstand zwischen -in Transportrichtung 30 gesehen- dem Ende der Zuführtransporteinrichtung 14 und dem Beginn des Haltekraftbereichs 28 beträgt vorzugsweise 0 bis 15 cm bei üblicherweise in der Blechemballageindustrie eingesetzten Blechtafeln 12 mit einer Dicke von 0,1 mm bis 0,4 mm und einer Maximalformatlänge von 1.000 mm. Wie bereits oben erwähnt, beginnt die Aktivierung des Haltesystems 22 unter Ausbildung einer Haltekraft erst "verspätet" zu einem Zeitpunkt, wenn die Vorderkante der Blechtafel 12 die Zuführtransporteinrichtung 14 und die Grenzlinie 56 (Null-Linie) passiert beziehungsweise verlassen hat. Die Blechtafel 12 erfährt eine volle Haltekraftwirkung erst dann, wenn die Vorderkante der Blechtafel 12 bereits vorzugsweise 0 cm bis 40 cm über die Zuführtransporteinrichtung 14 hinaus bewegt worden ist. Die Blechtafel 12 bewegt sich zunächst mit maximaler Zuführgeschwindigkeit in den Stapelbereich 20 hinein, ohne eine Haltekraftwirkung mittels der Überkopftransporteinrichtung 18 zu erfahren. Während dieser Zeit kann der oberhalb der einlaufenden Blechtafel 12 befindliche Überkopfriemen 24 noch beschleunigt werden, auch wenn sich die Blechtafel 12 und der Überkopfriemen 24 bereits berühren, da die Kraftwirkung zwischen dem Überkopfriemen 24 und der Blechtafel 12 nahezu null ist bei nach unten wirkender Schwerkraft der Blechtafel 12. Die "verpätete" Zuschaltung der Haltekräfte erfolgt erst dann, wenn die Riementransportgeschwindigkeit der Zuführtransporteinrichtung 14 und der Überkopftransporteinrichtung 18 gleich groß ist. Der Zeitpunkt der Zuschaltung kann dabei mit höheren Transportgeschwindigkeiten immer später gelegt werden. Die Blechtafel 12 wird dann immer noch vollständig mit den dann "verpätet" wirkenden Haltekräften an den Überkopfriemen 24 fixiert werden, bevor der Bremsvorgang mittels der Überkopftransporteinrichtung 18 eingeleitet wird. Somit wird die Zeit zum Abbremsen der Überkopfriemen 24 mit der Blechtafel 12 auf eine Transportgeschwindigkeit von null und für das anschließende Wiederbeschleunigen der leeren Überkopfriemen 24 (vor der Aufnahme der nächsten Blechtafel 12) bei der Vorrichtung 10 zum gleichzeitigen Transport der nachfolgenden Blechtafel 12 mittels der Zuführtransporteinrichtung 14 genutzt. Eine Einschränkung der Transportgeschwindigkeit wie bei traditionellen Vorrichtungen üblicher Gestaltung findet bei der erfindungsgemäßen Vorrichtung nicht statt.

Ein vorteilhafter Einsatz der erfindungsgemäßen Vorrichtung 10 wird am folgenden Rechenbeispiel deutlich: Bei einer Blechtafellänge von 1.000 mm und einem Abstand zwischen den zu transportierenden Blechtafeln 12 von 400 mm sowie bei einer Taktlänge von 1.400 mm (400 mm + 1.000 mm) ergibt sich bei einer Transportgeschwindigkeit von 2,5 Blechtafeln pro Sekunde eine Taktzeit von 400 Millisekunden.

Dabei gelten für eine Steigerung der Transportgeschwindigkeit folgende Zusammenhänge: Mit zunehmender Transportgeschwindigkeit verbleibt immer weniger Zeit für den Vorgang des Bremsens, das Ablegen der Blechtafel und das Wiederbeschleunigen der Überkopfriemen 24 auf die maximale Transportgeschwindigkeit (Zuführgeschwindigkeit). Bei hohen Transportgeschwindigkeiten erreicht daher die nachfolgende Blechtafel 12 die im Bereich der Grenzlinie 56 (Null-Linie) beginnenden Überkopfriemen 24, bevor diese wieder die Transportgeschwindigkeit der Zuführtransporteinrichtung 14 erreicht haben. Um ein frühzeitiges Verzögern der einlaufenden Blechtafel 12 durch die sich noch in der Beschleunigungsphase befindenden Überkopfriemen 24 zu verhindern, kann der Einschaltzeitpunkt der Haltekräfte mit steigender Transportgeschwindigkeit (Produktionsgeschwindigkeit) nach hinten verlegt werden. Ermöglicht wird dieses "verspätete" Aktivieren der Haltekräfte aufgrund folgenden Verhaltens der jeweils einlaufenden Blechtafel 12: Bei nicht aktivierten Haltekräften legt sich die Vorderkante der jeweils einlaufenden Blechtafel 12 zunächst an die leicht geneigten Überkopfriemen 24 an. Erst nachdem die Blechtafel 12 bereits einige cm in die Stapeleinrichtung 16 (Stapelbox) eingelaufen ist, würde sie sich von den Überkopfriemen 24 zu lösen beginnen und nach unten abklappen. Mit zunehmender Transportgeschwindigkeit wird die Strecke, die die Blechtafel 12 in die Stapeleinrichtung einläuft, bevor sie unten abklappt, immer größer. Dieses Verhalten kann genutzt werden, indem -wie oben beschrieben- die Zone der Haltekräfte in Transportrichtung 30 nach hinten verlegt wird und/oder der Einschaltzeitpunkt der Haltekräfte auf "später" gelegt wird, so dass die Blechtafel 12 bereits mit ihrer Vorderkante einige cm in die Stapeleinrichtung 16 eingelaufen ist. Dabei können die Beschleunigung- und Bremsbewegungsabläufe der Überkopfriemen 24 servomotorisch eingeleitet werden, um hohe Dynamik zu erzielen. Die Bewegungskurven können durch Inkrementalgeber erfasst und geregelt werden.

Vorzugsweise sind bei Einsatz einer Mehrzahl an Überkopfriemen 24 die äußeren Überkopfriemen mittels einer mechanischen Kopplung zusammen mit Seitenführungen der Stapeleinrichtung 16 (Stapelbox) auf eine entsprechende Formatbreite einer jeweiligen Blechtafel 12 einstellbar, wenn die Vorrichtung 10 auf sehr verschieden große Blechtafeln 12 umrüstbar sein soll. Das feste Abstandsmaß zwischen Seitenführungen und äußeren Überkopfriemen 24 beträgt vorzugsweise 100 mm. Dabei hat sich gezeigt, dass insbesondere verhältnismäßig breite Blechtafeln 12 von vier optimal in Breitenrichtung verteilten Überkopfriemen 24 getragen werden können, jedoch auch gleichzeitig alle anderen Formate (Formatbreitenvariation zwischen 700 mm und 1.220 mm) sicher gehalten werden, insbesondere auch an den Außenkanten der entsprechenden Blechtafel 12. Mit einer derartigen Ausführung ist eine zuverlässige Übergabe einer jeweiligen Blechtafel 12 von den Zuführriemen der Zuführtransporteinrichtung 14 auf die Überkopfriemen 24 der Überkopftransporteinrichtung 18 möglich. Vorteilhafterweise ist bei einem Formatwechsel von Blechtafeln 12 nahezu keine Verstellung der Bremse notwendig, so dass ein verhältnismäßig großer Bedienkomfort der Vorrichtung 10 vorliegt. Eine lediglich durchzuführende Plus/Minus-Korrektur im Bereich von wenigen mm erlaubt eine Feinanpassung der Blechtafelendposition am Ende des Bremsvorgangs.

Es ist somit möglich, mittels der erfindungsgemäßen Vorrichtung 10 die Produktionsleistung gegenüber üblichen Transportgeschwindigkeiten zu steigern und gleichzeitig eine verhältnismäßig einfache Bedienung der Vorrichtung 10 zu ermöglichen.

## Patentansprüche

1. Vorrichtung zum Transportieren und Stapeln von insbesondere tafelförmigen Gütern, wie Blechtafeln oder ähnlichem, mit einer Zuführttransporteinrichtung, die mit einer Stapeleinrichtung (16) in Verbindung steht, und mit einer, das jeweilige Gut bis oder nahezu bis zum Stillstand abbremsenden und dann zum Stapeln freigebenden und anschließend sich wieder beschleunigenden Überkopftransporteinrichtung (18), die wenigstens teilweise in einem Stapelbereich (20) oberhalb der Stapeleinrichtung (16) angeordnet ist und für das Halten beziehungsweise Freigeben des jeweiligen Gutes ein aktivierbares und deaktivierbares Haltesystem (22) aufweist, wobei ein Verzögerungssystem vorgesehen ist zur zeitlich verzögerten Aktivierung einer wirksamen Haltekraft der Überkopftransporteinrichtung (18) zu einem Zeitpunkt, wenn ein in Transportrichtung (30) gesehen vorderer Bereich (52) des Gutes (12) den Stapelbereich (20) in Stapetrichtung überlappt.

2. Vorrichtung nach Anspruch 1, **dadurch gekennzeichnet, dass** das Haltesystem (22) geschwindigkeitseinstellbar ist.

3. Vorrichtung nach einem der vorhergehenden Ansprüche, **dadurch gekennzeichnet, dass** das Haltesystem (22) mindestens einen Überkopfriemen (24) aufweist, der zur Ausbildung einer insbesondere einstellbaren Haltekraft mit einem Vakuum- und/oder Magnetsystem (25) gekoppelt ist.

4. Vorrichtung nach einem der vorhergehenden Ansprüche, **dadurch gekennzeichnet, dass** die Zuführtransporteinrichtung (14) unterhalb des zu transportierenden Gutes (12) angeordnet und insbesondere als Riementransporteinrichtung (26) ausgebildet ist.

5. Vorrichtung nach einem der vorhergehenden Ansprüche, **dadurch gekennzeichnet, dass** die Überkopftransporteinrichtung (18) einen Haltekraftbereich (28) aufweist, dessen -in Transportrichtung (30) gesehen- erstes Ende (32) in dem Stapelbereich (20) liegt.

6. Vorrichtung nach einem der vorhergehenden Ansprüche, **dadurch gekennzeichnet, dass** der Haltekraftbereich (28) der Überkopftransporteinrichtung (18) und die Zuführtransporteinrichtung (14) -in Transportrichtung (30) gesehen- voneinander beabstandet angeordnet sind.

7. Vorrichtung nach einem der vorhergehenden Ansprüche, **dadurch gekennzeichnet, dass** die Zuführtransporteinrichtung (14) und die Überkopftransporteinrichtung (18) -in Transportrichtung (30) gesehen- überlappend angeordnet sind unter Ausbildung eines Transportspalts (34).

8. Vorrichtung nach einem der vorhergehenden Ansprüche, **dadurch gekennzeichnet, dass** die Überkopftransporteinrichtung (18) in Bezug auf die Transportrichtung (30) der Zuführtransporteinrichtung (14) eine geneigte Transportfläche (36) aufweist.

9. Vorrichtung nach einem der vorhergehenden Ansprüche, **dadurch gekennzeichnet, dass** der Neigungswinkel (α) der Transportfläche (36) der Überkopftransporteinrichtung (18) zur insbesondere horizontalen Transportrichtung (30) der Zuführtransporteinrichtung (14) circa 2° bis 5° beträgt.

10. Vorrichtung nach einem der vorhergehenden Ansprüche, **dadurch gekennzeichnet, dass** die Zuführtransporteinrichtung (14) und die Überkopftransporteinrichtung (18) hinsichtlich ihrer Transportflächen (36,38) zueinander im Wesentlichen senkrecht zur Transportrichtung (30) beabstandet sind, insbesondere mit einem Abstand von circa 1 mm bis 10 mm.

11. Vorrichtung nach einem der vorhergehenden Ansprüche, **dadurch gekennzeichnet, dass** das Magnetsystem (25) mindestens einen nach dem Flussverdrängungsprinzip arbeitenden Elektromagneten aufweist, der bei seiner Aktivierung zur Kompensation eines Magnetfeldes mindestens eines Permanentmagneten geeignet ist.

12. Vorrichtung nach einem der vorhergehenden Ansprüche, **dadurch gekennzeichnet, dass** eine Sensoreinheit (40) vorgesehen ist zur Erfassung mindestens einer definierten Transportstellung eines jeweiligen Gutes (12).

13. Vorrichtung nach einem der vorhergehenden Ansprüche, **dadurch gekennzeichnet, dass** eine zentrale Steuer- beziehungsweise Regeleinrichtung (42) vorgesehen ist zur Einstellung der Betriebsparameter des Haltesystems (22) der Überkopftransporteinrichtung (18), insbesondere der Brems- und Beschleunigungsparameter, sowie zur Aktivierung und Deaktivierung des Haltesystems (22) in Abhängigkeit der Transportparameter der Zuführtransporteinrichtung (14) und/oder der Güterabmessungen insbesondere unter Ausnutzung der Information der Sensoreinheit (40).

14. Vorrichtung nach einem der vorhergehenden Ansprüche, **dadurch gekennzeichnet, dass** die Überkopftransporteinrichtung (18) und/oder die Stapeleinrichtung (16) zur Anpassung an gegebenenfalls unterschiedliche Güterformatgrößen breiten- und/oder längen- und/oder höhenverstellbar sind.

15. Vorrichtung nach einem der vorhergehenden Ansprüche, **dadurch gekennzeichnet, dass** die Stapeleinrichtung (16) mindestens eine mit insbesondere einer Mehrzahl an Luftaustrittsöffnungen versehene Güterkantenführungswand (48) aufweist.

16. Verfahren zum Transportieren und Stapeln von insbesondere tafelförmigen Gütern, wie Blechtafeln und ähnlichem, wobei ein jeweiliges Gut mittels einer Zuführtransporteinrichtung mit einer insbesondere einstellbaren Zuführgeschwindigkeit einer Stapeleinrichtung zugeführt wird wobei das jeweilige Gut (12) mittels einer Überkopftransporteinrichtung (18) in einen Stapelbereich (20) transportiert wird, in welcher es im Wesentlichen zum Stillstand gebracht und anschließend von der Überkopftransporteinrichtung (18) freigegeben wird zur Stapelung des Gutes (12) in der Stapeleinrichtung (16) durch freien Fall desselben, und wobei eine zeitlich verzögerte Aktivierung einer wirksamen Haltekraft der Überkopftransporteinrichtung (18) zu einem Zeitpunkt erfolgt, wenn ein in Transportrichtung (30) gesehen vorderer Bereich (52) des Gutes (12) den Stapelbereich (20) in Stapelrichtung überlappt.

17. Verfahren nach dem vorhergehenden Anspruch, **gekennzeichnet durch** folgende Verfahrensschritte:
- Befördern des jeweiligen Gutes (12) von der Zuführtransporteinrichtung (14) zu der wenigstens teilweise in dem Stapelbereich (20) oberhalb der Stapeleinrichtung (16) angeordneten Überkopftransporteinrichtung (18);
- Beschleunigen eines Haltesystems (22) der Überkopftransporteinrichtung (18) im Wesentlichen auf die Zuführgeschwindigkeit des Gutes (12) ;
- Aktivieren des Haltesystems (22) zur Fixierung des Gutes (12) in einem Haltekraftbereich (28) der Überkopftransporteinrichtung (18);
- Bremsen des Haltesystems (22) mit dem Gut (12) im Wesentlichen bis zu dessen Stillstand im Stapelbereich (20);
- Deaktivieren des Haltesystems (22) zur Stapelung des Gutes (12) bei sich einstellendem freien Fall in im Wesentlichen vertikaler Richtung (50) in der Stapeleinrichtung (16).

18. Verfahren nach einem der vorhergehenden Ansprüche, **dadurch gekennzeichnet, dass** das Aktivieren des Haltesystems (22) nach Erreichen einer Transportfläche (36) der Überkopftransporteinrichtung (18) im Haltekraftbereich (28) mittels des vorderen Bereichs (52) des Gutes (12) und insbesondere nach Herstellen eines Anlagekontakts des vorderen Bereichs (52) mit der Transportfläche (36) erfolgt.

19. Verfahren nach einem der vorhergehenden Ansprüche, **dadurch gekennzeichnet, dass** während des Beförderns des Gutes (12) von der Zuführtransporteinrichtung (14) zur Überkopftransporteinrichtung (18) zur Begünstigung eines Anlagekontakts des Gutes (12) an einer Transportfläche (36) der Überkopftransporteinrichtung (18) mittels selbiger eine Transportrichtungsänderung von circa 2° bis 5° in Bezug auf die Transportrichtung (30) der Zuführtransporteinrichtung (14) und insbesondere hinsichtlich der Horizontalen erfolgt.

20. Verfahren nach einem der vorhergehenden Ansprüche, **dadurch gekennzeichnet, dass** mittels einer Sensoreinheit (40) eine Hinterkante (54) des Gutes (12) in einer definierten Transportstellung erfasst wird zur anschließenden sukzessiven Auslösung des Aktivierens, des Bremsens, des Deaktivierens und des Beschleunigens des Haltesystems (22).

21. Verfahren nach einem der vorhergehenden Ansprüche, **dadurch gekennzeichnet, dass** in Abhängigkeit einer sensorischen Erfassung einer definierten Transportstellung des Gutes (12) das Aktivieren des Haltesystems (22) nach Ablauf eines konstanten, insbesondere festlegbaren Zeitintervalls erfolgt.

22. Verfahren nach einem der vorhergehenden Ansprüche, **dadurch gekennzeichnet, dass** der Zeitpunkt des Aktivierens des Haltesystems (22) in Abhängigkeit der Transportgeschwindigkeit der Zuführtransporteinrichtung (14) und/oder des Materials und/oder der geometrischen Ausbildung des Gutes (12) festgelegt wird.

23. Verfahren nach einem der vorhergehenden Ansprüche, **dadurch gekennzeichnet, dass** mittels einer Steuer- beziehungsweise Regeleinrichtung (42) insbesondere unter Ausnutzung eines parameterabhängigen Kennfeldes ein automatisiertes Transportieren und Stapeln der Güter (12) erfolgt.

## Claims

1. Means for the transporting and stacking, especially of panel-shaped goods such as sheet metal panels or similar with a feed transport means connected to a stacking means (16) and with an overhead transport means (18) which breaks the speed of the relevant goods almost or completely and then releases the same to be stacked, and which subsequently speeds up again, whereby the former is at least in part positioned within a stacking area (20) above the stacking means (16), and whereby the same comprises a holding system (22) that can be activated or deactivated, for the holding, i.e. the releasing of the relevant goods, whereby a delaying system is envisaged, for the time-delayed activating of an effective holding force for the overhead transport means (18) at a point in time when a section (52) of the goods (12) that faces towards the front in the direction of transport (30) overlaps the stacking area (20) in the stacking direction.

2. Means according to claim 1, **characterised in that** the speed of the holding system (22) can be adjusted.

3. Means according to one of the preceding claims, **characterised in that** the holding system (22) comprises at least one overhead belt (24) which is coupled with a vacuum and/or magnet system (25) in order to be able to create especially an adjustable holding force.

4. Means according to one of the preceding claims, **characterised in that** the feed transport means (14) is positioned below the goods (12) to be transported, and especially takes the form of a belt transport means (26).

5. Means according to one of the preceding claims, **characterised in that** the overhead transport means (18) comprises a holding force section (28), the first end (32) of which is located within the stacking area (20) when viewed in the direction of transport (30).

6. Means according to one of the preceding claims, **characterised in that** the holding force section (28) of the overhead transport means (18) and the feed transport means (14) are positioned separately from one another when viewed in the direction of transport (30).

7. Means according to one of the preceding claims, **characterised in that** the feed transport means (14) and the overhead transport means (18) are arranged in an overlapping manner when viewed in the direction of transport (30), and **in that** the same form a transport gap (34).

8. Means according to one of the preceding claims, **characterised in that** the overhead transport means (18) comprises an inclined transport surface (36) in relation to the transport direction (30) of the feed transport means (14).

9. Means according to one of the preceding claims, **characterised in that** the angle of inclination (α) of the transport surface (36) of the overhead transport means (18) is approximately 2° to 5°, especially in the horizontal direction of transport (30) of the feed transport means (14).

10. Means according to one of the preceding claims, **characterised in that** the feed transport means (14) and the overhead transport means (18) are spaced apart in relation to one another substantially vertically in relation to the direction of transport (30) with regard to their transport surfaces (36, 38), and especially at a distance of approximately 1 mm to 10mm.

11. Means according to one of the preceding claims, **characterised in that** the magnet system (25) comprises at least one electromagnet working according to the flow displacement principle, whereby the same is suitable for the compensating of a magnetic field of at least one permanent magnet when it is activated.

12. Means according to one of the preceding claims, **characterised in that** a sensor unit (40) is envisaged, for the recording of at least one defined transport position of the relevant goods (12).

13. Means according to one of the preceding claims, **characterised in that** a central control, i.e. adjustment means (42) is envisaged, for the adjustment of the operating parameters of the holding system (22) of the overhead transport means (18), especially the breaking and acceleration parameters, as well as for the activating and the de-activating of the holding system (22) in dependence on the transport parameters of the feed transport means (14) and/or the dimensions of the goods, especially whilst utilising information supplied by the sensor unit (40).

14. Means according to one of the preceding claims, **characterised in that** the width and/or length and/or the height of the overhead transport means (18) and/or the stacking means (16) are adjustable to suit the relevant format dimensions of the goods.

15. Means according to one of the preceding claims, **characterised in that** the stacking means (16) comprises a goods edge guiding wall (48), which in turn comprises at least one, and especially a plurality of air vents.

16. Method for the transporting and stacking, especially of panel-shaped goods such as sheet metal panels and suchlike, whereby the relevant goods are supplied to a stacking means via a feed transport means, especially with an adjustable feed speed, whereby the relevant goods (12) are transported into a stacking area (20) with the aid of an overhead transport means (18), in which the same are substantially brought to a standstill and subsequently released by the overhead transport means (18) for the stacking of the goods (12) in the stacking direction (16), whereby the same fall freely, and whereby a time-delayed activating of an effective holding force of the overhead transport means (18) occurs at a point in time when a front section (52) of the goods (12) that faces towards the front in the direction of transport (30) overlaps the stacking area (20) in the stacking direction.

17. Method according to the preceding claim, **characterised in that** the same comprises the following method stages:
- the conveying of the relevant goods (12) from the feed transport means (14) to the overhead transport means (18) located at least in part within the stacking area (20) above the stacking means (16);
- the accelerating of a holding system (22) of the overhead transport means (18) substantially up to the feed speed of the goods (12);
- the activating of the holding system (22) for the affixing of the goods (12) within a holding force section (28) of the overhead transport means (18);
- the breaking of the holding system (22) containing the goods (12) substantially up to a standstill of the same within the stacking area (20);
- the deactivating of the holding system (22) for the stacking of the goods (12) and the subsequent free fall of the same in a substantially vertical direction (50) within the stacking means (16).

18. Method according to one of the preceding claims, **characterised in that** the activating of the holding system (22) following the reaching of a transport surface (36) of the overhead transport means (18) within the holding force section (28) with the aid of the front section (52) of the goods (12), and especially following the creation of an abutment contact of the front section (52) with the transport surface (36).

19. Method according to one of the preceding claims, **characterised in that** a transport direction change of approximately 2° to 5° in relation to the direction of transport (30) of the feed transport means (14), and especially in relation to a horizontal, is created during the conveying of the goods (12) from the feed transport means (14) to the overhead transport means (18) in order to favour an abutment contact of the goods (12) with a transport surface (36) of the overhead transport means (18) with the aid of the same.

20. Method according to one of the preceding claims, **characterised in that** a rear edge (54) of the goods (12) is taken up in a defined transport position with the aid of a sensor unit (40), for the subsequent successive initiating of the activating process, the breaking, the deactivating, and the accelerating of the holding system (22).

21. Method according to one of the preceding claims, **characterised in that** the activating of the holding system (22) occurs in dependence on a sensor recording of a defined transport position of the goods (12) following the expiry of a constant, especially an adjustable time interval.

22. Method according to one of the preceding claims, **characterised in that** the point in time for the activating of the holding system (22) is determined in dependence on the transport speed of the feed transport means (14) and/or the material and/or the geometric dimensions of the goods (12).

23. Method according to one of the preceding claims, **characterised in that** an automated transporting and stacking of the goods (12) occurs with the aid of a control, i.e. an adjustment means (42), especially whilst utilising a parameter dependent reference field.

## Revendications

1. Dispositif pour transporter et empiler en particulier des marchandises tabulaires, telles que des feuilles de tôle ou similaires, avec un dispositif de transport et d'alimentation relié à un dispositif d'empilage (16) et avec un dispositif de transport au-dessus de la tête (18) freinant la marchandise jusqu'à l'arrêt ou presque, la libérant pour l'empilage et puis accélérant de nouveau, au moins disposé en partie dans une zone d'empilage (20) au-dessus du dispositif d'empilage (16) et présentant un système d'arrêt (22) pouvant être activé et désactivé pour arrêter ou libérer la marchandise, un système de temporisation étant prévu pour l'activation temporisée d'une force d'arrêt efficace du dispositif de transport au-dessus de la tête (18) à un moment où une zone avant (52) de la marchandise (12) vue dans le sens du transport (30) enchevauche la zone d'empilage (20) dans le sens de l'empilage.

2. Dispositif selon la revendication 1, **caractérisé en ce que** la vitesse du système d'arrêt (22) peut être réglée.

3. Dispositif selon l'une des revendications précédentes, **caractérisé en ce que** le système d'arrêt (22) présente au moins une courroie (24) installée au-dessus de la tête, et qui est couplée à un système de vide et/ou magnétique (25) pour créer une force d'arrêt réglable en particulier.

4. Dispositif selon l'une des revendications précédentes, **caractérisé en ce que** le dispositif de transport et d'alimentation (14) est disposé sous la marchandise (12) à transporter et en particulier est conçu comme dispositif de transport à courroie (26).

5. Dispositif selon l'une des revendications précédentes, **caractérisé en ce que** le dispositif de transport au-dessus de la tête (18) présente une zone de force d'arrêt (28) dont la première extrémité (32) - vue dans le sens du transport (30) - se trouve dans la zone d'empilage (20).

6. Dispositif selon l'une des revendications précédentes, **caractérisé en ce que** la zone de force d'arrêt (28) du dispositif de transport au-dessus de la tête (18) et que le dispositif de transport et d'alimentation (14) - vu dans le sens du transport (30) - sont disposés à distance l'un par rapport à l'autre.

7. Dispositif selon l'une des revendications précédentes, **caractérisé en ce que** le dispositif de transport et d'alimentation (14) et que le dispositif de transport au-dessus de la tête (18) - vu dans le sens du transport (30) - se chevauchent en formant une fente de transport (34).

8. Dispositif selon l'une des revendications précédentes, **caractérisé en ce que** le dispositif de transport au-dessus de la tête (18) présente une surface de transport (36) inclinée par rapport au sens de transport (30) du dispositif de transport et d'alimentation (14).

9. Dispositif selon l'une des revendications précédentes, **caractérisé en ce que** l'angle d'inclinaison (α) de la surface de transport (36) du dispositif de transport au-dessus de la tête (18) en particulier par rapport au sens de transport (30) horizontal du dispositif de transport et d'alimentation (14) est de 2° à 5° environ.

10. Dispositif selon l'une des revendications précédentes, **caractérisé en ce que** le dispositif de transport et d'alimentation (14) et le dispositif de transport au-dessus de la tête (18) en ce qui concerne leurs surfaces de transport (36, 38) entre eux sont écartés principalement verticalement par rapport au sens du transport (30), en particulier avec un écartement d'environ 1 à 10 mm.

11. Dispositif selon l'une des revendications précédentes, **caractérisé en ce que** le système magnétique (25) présente au moins un électroaimant fonctionnant suivant le principe du déplacement du flux, qui à son activation est approprié pour compenser un champ magnétique d'au moins un aimant permanent.

12. Dispositif selon l'une des revendications précédentes, **caractérisé en ce qu'**une unité de capteur (40) est prévue pour la détection d'au moins une position de transport définie d'une marchandise quelconque (12).

13. Dispositif selon l'une des revendications précédentes, **caractérisé en ce qu'**un dispositif central de commande ou de régulation (42) est prévu pour le réglage des paramètres de service du système d'arrêt (22) du dispositif de transport au-dessus de la tête (18), en particulier des paramètres de freinage et d'accélération ainsi que pour l'activation et la désactivation du système d'arrêt (22) en fonction des paramètres de transport du dispositif de transport et d'alimentation (14) et/ou des dimensions de la marchandise en particulier en utilisant les informations de l'unité de capteur (40).

14. Dispositif selon l'une des revendications précédentes, **caractérisé en ce que** le dispositif de transport au-dessus de la tête (18) et/ou le dispositif d'empilage (16) peuvent être réglés en largeur et/ou longueur et/ou hauteur pour être éventuellement adaptés aux différentes tailles des formats de marchandise.

15. Dispositif selon l'une des revendications précédentes, **caractérisé en ce que** le dispositif d'empilage (16) possède au moins une paroi de guidage des bords de marchandise (48) disposant en particulier de plusieurs ouvertures pour la sortie de l'air.

16. Procédure pour transporter et empiler en particulier des marchandises tabulaires, telles que des feuilles de tôle ou similaires, une marchandise quelconque étant amenée à un dispositif d'empilage à l'aide d'un dispositif de transport et d'alimentation avec en particulier une vitesse d'alimentation réglable, la marchandise (12) respective étant transportée à l'aide d'un dispositif de transport au-dessus de la tête (18) dans une zone d'empilage (20) où elle est pour l'essentiel arrêtée et puis libérée par le dispositif de transport au-dessus de la tête (18) pour permettre l'empilage de la marchandise (12) dans le dispositif d'empilage (16) par chute libre de celle-ci et une activation temporisée d'une force d'arrêt effective du dispositif de transport au-dessus de la tête (18) a lieu au moment où la zone avant (52) de la marchandise (12) vue dans le sens du transport (30) recouvre la zone d'empilage (20) dans le sens de l'empilage.

17. Procédure selon la revendication précédente, **caractérisée par** les étapes de procédure suivantes :
- Transport de la marchandise (12) du dispositif de transport et d'alimentation (14) au dispositif de transport au-dessus de la tête (18) disposé au moins en partie dans la zone d'empilage (20) au-dessus du dispositif d'empilage (16) ;
- Accélération d'un système d'arrêt (22) du dispositif de transport au-dessus de la tête (18) pour l'essentiel à la vitesse d'alimentation de la marchandise (12) ;
- Activation du système d'arrêt (22) pour la fixation de la marchandise (12) dans une zone de force d'arrêt (28) du dispositif de transport au-dessus de la tête (18) ;
- Freinage du système d'arrêt (22) avec la marchandise (12) pour l'essentiel jusqu'à l'arrêt dans la zone d'empilage (20) ;
- Désactivation du système d'arrêt (22) pour l'empilage de la marchandise (12) par la chute libre de celle-ci s'amorçant pour l'essentiel dans le sens vertical (50) dans le dispositif d'empilage (16).

18. Procédure selon l'une des revendications précédentes, **caractérisé en ce que** l'activation du système d'arrêt (22) a lieu après qu'une surface de transport (36) du dispositif de transport au-dessus de la tête (18) arrive dans la zone de force d'arrêt (28) par la zone avant (52) de la marchandise (12) et en particulier après avoir établi un contact de l'installation de la zone avant (52) avec la surface de transport (36).

19. Procédure selon l'une des revendications précédentes, **caractérisé en ce que** pendant le transport de la marchandise (12) du dispositif de transport et d'alimentation (14) au dispositif de transport au-dessus de la tête (18) pour favoriser un contact de l'installation de la marchandise (12) à une surface de transport (36) du dispositif de transport au-dessus de la tête (18) au moyen de celle-ci une modification du sens de transport d'environ 2° à 5° a lieu par rapport au sens de transport (30) du dispositif de transport et d'alimentation (14) et en particulier en ce qui concerne l'horizontale.

20. Procédure suivant l'une des revendications précédentes, **caractérisé en ce qu'**à l'aide d'une unité à capteur (40) un bord arrière (54) de la marchandise (12) est détecté dans une position de transport définie pour déclencher ensuite successivement l'activation, le freinage, la désactivation et l'accélération du système d'arrêt (22).

21. Procédure selon l'une des revendications précédentes, **caractérisé en ce qu'**en fonction d'une détection par capteur d'une position de transport définie de la marchandise (12), l'activation du système d'arrêt (22) a lieu après écoulement d'un intervalle de temps constant, en particulier réglable.

22. Procédure selon l'une des revendications précédentes, **caractérisé en ce que** le moment de l'activation du système d'arrêt (22) est fixé en fonction de la vitesse de transport du dispositif de transport et d'alimentation (14) et/ou du matériau et/ou de la conception géométrique de la marchandise (12).

23. Procédure selon l'une des revendications précédentes, **caractérisé en ce qu'**un transport et empilage automatiques des marchandises (12) a lieu au moyen d'un dispositif de commande ou de régulation (42), en particulier en utilisant un champ caractéristique dépendant de paramètres.
